# EUROPÄISCHE PATENTSCHRIFT

(11) **EP 2 647 460 B1**
(45) Veröffentlichungstag und Bekanntmachung des Hinweises auf die Patenterteilung: **10.12.2014**
(21) Anmeldenummer: 12162874.7
(22) Anmeldetag: 02.04.2012
(51) Int. Cl.: B23F 9/10

(54) **Verfahren zum Herstellen von Kegel- oder Hyproidrädern im Tauchverfahren**
Method for manufacturing bevel or hypoid gears in a plunge-cutting process
Procédé de fabrication de roues hypoïdes ou coniques par méthode d'immersion

(43) Veröffentlichungstag der Anmeldung: 09.10.2013
(73) Patentinhaber: Klingelnberg AG, 8050 Zürich (CH)
(72) Erfinder: Dürr, Alexander, Saline, MI 48176 (US); Kreh, Wilhelm, 42477 Radevormwald (DE)
(74) Vertreter: OK pat AG

(56) Entgegenhaltungen:
- EP-B1- 0 850 120
- WO-A1-97/31746

## Beschreibung

Die vorliegende Erfindung betrifft Verfahren zum Herstellen von Kegelrädern oder Hypoidrädern im Einzelteil-Tauchverfahren oder im kontinuierlichen Tauchverfahren, insbesondere unter Verwendung eines Fräsmesserkopfs.

### Stand der Technik

Es gibt verschiedene Typen von Kegel- und Hypoidrädern.

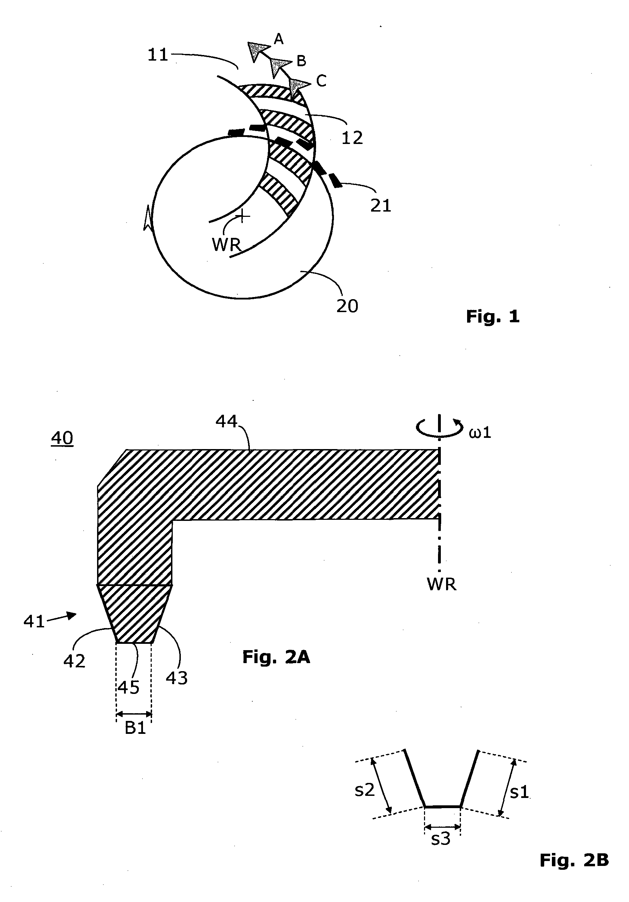

Zum Beispiel kreisbogenverzahnte Kegelräder werden im Einzelteilverfahren (auch intermittierendes Teilverfahren, intermitted indexing process, single indexing process oder face milling genannt) gefertigt. Das Einzelteilverfahren ist in Fig. 1 schematisch dargestellt. Die Messer 21 eines Messerkopfs 20 vollziehen eine kreisförmige Bewegung während der eine Lücke des zu erzeugenden Kegelrades 11 gefertigt wird. Zum Fertigen weiterer Zahnlücken wird der Messerkopf 20 zurück gezogen und das Werkstück 11 um einen Teilungswinkel gedreht. Das schrittweise Weiterdrehen (hier im Gegenuhrzeigersinn) ist in Fig. 1 durch die Pfeile A, B und C (Teilungsdrehung genannt) angedeutet. Es wird somit immer eine Zahnlücke 22 auf einmal gefertigt.

Epizykloidisch, insbesondere erweitert-epizykloidisch (auch verlängertepizykloidisch genannt), verzahnte Kegelräder werden hingegen durch ein kontinuierliches Teilverfahren (auch kontinuierliches Fräsen, continuous indexing process, oder face hobbing genannt) gefertigt. Bei diesem kontinuierlichen Teilverfahren drehen sich sowohl der Messerkopf als auch das Werkstück in einem zeitlich aufeinander abgestimmten Bewegungsablauf. Die Teilung erfolgt also kontinuierlich und Lücken und die entsprechenden Zähne werden quasi gleichzeitig erzeugt.

Es ist bekannt, dass man ein Tellerrad nicht nur durch Wälzfräsen sondern auch durch das Tauchen (auch Einstechen genannt) herstellen kann. Dabei wird das Werkzeug in das Werkstück vorgeschoben. Man spricht in diesem Fall von einem Formverfahren oder auch von einer FORMATE®-Verzahnung (FORMATE® ist eine Marke der Firma The Gleason Works, Rochester, NY, USA). Diese Vorgehensweise spart Zeit bei der Fertigung des Tellerrades. Da keine generierende Wälzbewegung erfolgt, bildet sich das Werkzeugprofil in der Tellerradlücke ab. Das so gefertigte Tellerrad besitzt dann das Profil des Werkzeugs, d.h. die Profilkrümmung der Zahnflanken ergibt sich direkt aus der Werkzeugprofilform des ersten Werkzeugs. Das entsprechende konjugierte Kegelradritzel eines Kegelradpaares muss dann aber in einem modifizierten Wälzverfahren hergestellt werden, damit gewälztes Ritzel und getauchtes Tellerrad korrekt miteinander laufen können. Details hierzu sind z.B. dem Buch "Kegelräder; Grundlagen, Anwendungen", von J. Klingelnberg, Springer Verlag, 2008, Seite 16 - 17 zu entnehmen.

Aus dem US-Patent US 1,982,036 ist ein Verfahren zur Herstellung eines getauchten Tellerrades und eines passenden gewälzten Ritzels bekannt, wobei beide Kegelräder in diesem Beispiel konisch zulaufende ("tapered") Zähne aufweisen. Details zu dem erwähnten Verfahren sind den US-Patenten US 2,105,104 und US 2,310,484 zu entnehmen. In diesen US-Patenten geht es um die Herstellung bogenverzahnter, respektive spiralverzahnter Kegelräder.

Beim Tauchen muss das Werkzeug auf eine vorbestimmte Tiefe ins Werkstück eingestochen werden, bevor das spanabhebende Entfernen von Material beendet ist. Das Tauchen erfolgt bisher meist indem das Werkzeug relativ zum Werkstück linear, z.B. durch das lineare Bewegen eines Schlittens parallel zur Werkzeugachse, zugestellt wird. Es liegt auf der Hand, dass mit zunehmendem Eintauchen die sogenannte aktive Schneidenlänge zunimmt, die spanabhebend arbeitet. Das hat zur Folge, dass die auftretenden Kräfte und die Belastung der Achsen der Maschine zunehmen. Es können also während des Tauchens ungleichmässige Werkzeug- und Maschinenbelastungen auftreten. Ausserdem wird die NC-Steuerung der Maschine mehr belastet, da sie versucht etwaige auftretende Schwingungen auszuregeln.

Das Auftreten ungleichmässiger Werkzeugbelastungen wird zum Beispiel im Absatz [0011] des Patents EP 0850120 B1 beschrieben. Das EP 0850120 B1 befasst sich jedoch primär mit der Bereitstellung einer Lösung, die es erlauben soll die Spanbelastung der sogenannten sekundären Schneidkante einer Klinge des Werkzeugs zu verringern. Gemäss EP 0850120 B1 wird ein spezieller Ansatz zum Vorschieben des Werkzeugs auf eine vorbestimmte Tiefe im Werkstück beschrieben. Dabei wird ein Vorschubweg vorgegeben, der sich aus zwei Vektorkomponenten zusammensetzt. Die erste Vektorkomponente verläuft in Richtung der Werkzeugachse, wie beim bisherigen Tauchen, und die zweite Vektorkomponente verläuft in Richtung der Flächenbreite des Werkstücks, d.h. entlang der Zahnlücke.

Aus der internationalen Patentanmeldung WO 97/31746 ist bekannt, dass man ein tassenförmiges (cup-shaped) Werkzeug zur spanabhebenden Bearbeitung eines Werkstücks so einsetzen kann, dass man das Tauchen bereits beginnt während das Werkstück noch eine Teilungsdrehung ausführt. Aufgabenstellung dieser Patentanmeldung war es die Verfahrensdauer kürzer zu gestalten.

Es stellt sich die Aufgabe die Belastungen von Werkzeug und/oder Maschine beim Tauchfräsen zu verringern.

Gemäss Erfindung geht es um das Fräsen von Kegelrädern und Hypoidrädern. Insbesondere geht es um Tellerräder.

Die Aufgabe wird erfindungsgemäß durch ein Verfahren gemäß Patentanspruch 1 gelöst. Vorteilhafte Ausgestaltungen der Erfindung bilden die Gegenstände der abhängigen Patentansprüche.

Das Verfahren der Erfindung ist zum spanabhebenden Fertigen mindestens einer Zahnlücke eines Kegelrad- oder Hypoidrad-Werkstücks ausgelegt und umfasst die folgenden Schritte, die im Einzelteilverfahren oder im kontinuierlichen Verfahren ausgeführt werden:
a. Drehen eines Werkzeugs mit mehreren Schneidkanten um eine Werkzeugrotationsachse während des Ausführens der nachfolgenden Teilschritte,
b. Ausführen einer ersten relativen linearen Tauchbewegung entlang eines ersten Tauchvektors, der sich im Wesentlichen senkrecht zum Fusskegel des Werkstücks erstreckt und der einen Endpunkt der ersten Tauchbewegung festlegt, der an einer Position des Werkstücks liegt, die mehr als 10 Prozent der Lückentiefe der zu fertigenden Zahnlücke beträgt, um während des Ausführens der ersten Tauchbewegung mit der ersten Hauptschneide primär einen zahnkopfnahen Bereich einer ersten Zahnflanke der Zahnlücke zu bearbeiten,
c. Ausführen einer relativen Querbewegung entlang eines Quervektors, um die zweite Hauptschneide in Richtung der zweiten (gegenüberliegenden) Zahnflanke der Zahnlücke zu bewegen und um primär einen zahnkopfnahen Bereich der zweiten Zahnflanke der Zahnlücke zu bearbeiten,
d. Ausführen einer zweiten relativen Tauchbewegung entlang eines Vektorpfads, der einen Endpunkt der zweiten Tauchbewegung festlegt, der an einer Position des Werkstücks liegt, die in etwa der Lückentiefe der zu fertigenden Zahnlücke entspricht.

Nach diesen Teilschritten kann entweder mit dem gleichen Werkzeug in der soeben gefertigten Zahnlücke eine Nachbearbeitung erfolgen, indem das Werkstück eine leichte Drehung in beide Drehrichtungen ausführt, und/oder das Werkzeug kann relativ zum Werkstück zurück gezogen werden, bevor z.B. im Einzelteilverfahren eine Teilungsdrehung erfolgt und das Werkzeug zum Fertigen einer weiteren Zahnlücke erneut angesetzt wird und die oben aufgeführten Schritte erneut ausführt werden. Bei dem kontinuierlichen Verfahren hat diese "zusätzliche" Drehung des Werkrades (zusätzlich zur Teilungsdrehung) über die Kopplung zum Messerkopf Auswirkungen auf die Messerkopfdrehung.

Beim Einzelteilverfahren gemäss Erfindung wird Schritt für Schritt eine Zahnlücke nach der anderen bearbeitet. Beim kontinuierlichen Verfahren gemäss Erfindung werden alle Zahnlücken miteinander bearbeitet, wobei der Tauchvorschub beim kontinuierlichen Verfahren langsamer ist als beim Einzelteilverfahren.

Bei dem erfinderischen Verfahren werden beim Herstellen der Zahnlücken eines Tellerrads mindestens die folgenden Teilschritte ausgeführt. In einem ersten Teilschritt wird mindestens ein Messer oder Schneider eines Werkzeugs aussermittig der zu fertigenden Zahnlücken ein Stück weit in das Material des Tellerrad-Werkstücks eingetaucht. Dies geschieht entlang des ersten geraden Tauchvektors, der im Wesentlichen senkrecht auf dem Fusskegel des zu bearbeitenden Werkstücks steht. Dabei wird ein zahnkopfnaher (Linien-)Bereich einer ersten Zahnflanke der zu fertigenden Zahnlücken bereits nahezu fertig gestellt, wobei entlang einer Linie das Sollmass erreicht wird, während im restlichen Bereich der ersten Zahnflanke ein Aufmass an Material stehen bleibt. In einem an den ersten Teilschritt anschließenden zweiten Teilschritt wird das Messer oder der Schneider des Werkzeugs relativ betrachtet seitlich von der ersten Zahnflanke weg in Richtung der zweiten Zahnflanke der Zahnlücke bewegt. Diese Bewegung erfolgt entlang eines Quervektors, der einer Gerade folgt. Dabei wird ein zahnkopfnaher Bereich der zweiten Zahnflanke der zu fertigenden Zahnlücken nahezu fertig gestellt, wobei entlang einer Linie das Sollmass erreicht wird, während im restlichen Bereich der zweiten Zahnflanke ein Aufmass an Material stehen bleibt. Nun wird das Messer oder der Schneider tiefer in die zu fertigenden Zahnlücken eingetaucht, bis in etwa der Zahngrund erreicht ist und die erste und zweite Zahnflanken vom Zahnkopf bis zum Zahnfuss ganz fertig gestellt oder nahezu fertig gestellt sind. Der dritte Teilschritt erfolgt durch eine Relativbewegung entlang eines Vektorpfads, der sich aus einem oder aus zwei Teilvektoren zusammen setzt.

Vorzugsweise wird die Erfindung so implementiert, dass sich die Bewegung des ersten Teilschritts durch eine NC-gesteuerte lineare (Schlitten-) Bewegung des Werkzeugs in Richtung des Werkstücks ergibt. Die Bewegung des zweiten Teilschritts wird vorzugsweise durch eine NC-gesteuerte Überlagerung von zwei Linearbewegungen erzeugt. Die Bewegung(en) des dritten Teilschritts kann durch eine Überlagerung von drei NC-gesteuerte linearen (Schlitten-) Bewegungen des Werkzeugs in Richtung des Werkstücks erzeugt werden.

Vorzugsweise dient ein Messerkopf als Schneidwerkzeug,
- der entweder mindestens einen Innenschneider und einen Außenschneider mit jeweils einer Hauptschneide (zum Erzeugen der Flankenendgeometrie), einer Nebenscheide und einer Kopfschneide besitzt, oder
- der mindestens ein vollschneidendes Messer mit zwei Hauptschneiden und einer Kopfschneide besitzt.

Es sind auch Ausführungen des Schneidwerkzeugs mit Mitten- oder Vorschneider möglich.

Die Erfindung kann besonders vorteilhaft beim Herstellen von Tellerrädern eingesetzt werden. Ganz besonders vorteilhaft ist die Erfindung für das Fertigen von grossmoduligen Tellerrädern.

Das Tauchverfahren der Erfindung wird insbesondere unter Verwendung eines Fräsmesserkopfs ausgeführt, der einen scheiben-, teller- oder topfförmigen Grundkörper aufweist, der mit (Stab-)Messern oder (Schneid-) Zähnen bestückt ist.

Die Bezugszeichenliste ist Bestandteil der Offenbarung.

### ZEICHNUNGEN

Die Figuren werden zusammenhängend und übergreifend beschrieben. Ausführungsbeispiele der Erfindung werden im Folgenden unter Bezugnahme auf die Zeichnungen näher beschrieben.
- **FIG. 1**: zeigt eine schematische Illustration des Einzelteilverfahrens;
- **FIG. 2A**: zeigt eine schematische Illustration eines Werkzeugs im Axialschnitt;
- **FIG. 2B**: zeigt eine schematische Illustration der Schneidkantenlänge des Werkzeugs nach Fig. 2A im Axialschnitt;
- **FIG. 3A**: zeigt einen schematischen Schnitt einer Radialebene eines Teils eines Kegelradwerkstücks zur Illustration eines ersten Verfahrensschritts der Erfindung;
- **FIG. 3B**: zeigt einen schematischen Schnitt der Radialebene des Teils des Kegelradwerkstücks nach Fig. 3A zur Illustration eines zweiten Verfahrensschritts der Erfindung;
- **FIG. 3C**: zeigt einen schematischen Schnitt der Radialebene des Teils des Kegelradwerkstücks nach Fig. 3A zur Illustration eines dritten Verfahrensschritts der Erfindung;
- **FIG. 3D**: zeigt eine schematische Illustration der Schneidkantenlänge und der aktiven Schneidkantenlänge des Werkzeugs nach Fig. 3A;
- **FIG. 3E**: zeigt eine schematische Illustration der Schneidkantenlänge und der aktiven Schneidkantenlänge des Werkzeugs nach Fig. 3B;
- **FIG. 3F**: zeigt eine schematische Illustration der Schneidkantenlänge und der aktiven Schneidkantenlänge des Werkzeugs nach Fig. 3C;
- **FIG. 3G**: zeigt eine stark schematisierte Vektorprojektionsdarstellung der Verfahrensschritte der Erfindung in vergrößerter Darstellung in einer Tangentialebene, deren Schnittlinie F1 mit einer Werkstück-Kegelmantelfläche mit der Senkrechten des Fusskegels zusammenfällt, wobei der dritte Teilschritt nur einen schräg verlaufenden Vektor umfasst;
- **FIG. 3H**: zeigt eine stark schematisierte Vektorprojektionsdarstellung alternativer Verfahrensschritte der Erfindung in vergrößerter Darstellung in einer Tangentialebene, deren Schnittlinie F1 mit einer Werkstück-Kegelmantelfläche mit der Senkrechten des Fusskegels zusammenfällt, wobei der dritte Teilschritt zwei Vektoren umfasst;
- **FIG. 4A**: zeigt eine schematische Illustration eines Messerkopf-Werkzeugs in der Axialschnittebene des Tellerrad-Werkstücks beim Eingriff in das Tellerrad-Werkstück, das hier eine konstante Zahnhöhe aufweist;
- **FIG. 4B**: zeigt eine schematische Ausschnittsvergrösserung der Axialschnittebene einer Zahnlücke des Tellerrad-Werkstücks nach Fig. 4A;
- **FIG. 5A**: zeigt eine stark schematisierte Draufsicht eines Teils eines Planrads eines Kegelradwerkstücks zur Illustration des ersten Verfahrensschritts der Erfindung;
- **FIG. 5B**: zeigt eine stark schematisierte Draufsicht des Teils des Planrads des Kegelradwerkstücks nach Fig. 5A zur Illustration des zweiten Verfahrensschritts der Erfindung;
- **FIG. 5C**: zeigt eine stark schematisierte Draufsicht des Teils des Planrads des Kegelradwerkstücks nach Fig. 5A zur Illustration des dritten Verfahrensschritts der Erfindung;
- **FIG. 6**: zeigt eine Darstellung, die einerseits einen Schnitt durch ein Werkstück mit einer zu fertigenden Zahnlücke, eine Draufsicht auf die zu fertigenden Zahnlücke, und die entsprechenden Projektionen der Vektoren in einer nebenstehenden Abbildung umfasst, wobei es um die Darstellung der Teilschritte eines vereinfachten Verfahrens (z.B. analog zu Fig. 3G) geht;
- **FIG. 7**: zeigt eine Darstellung, die einerseits einen Schnitt durch ein Werkstück mit einer zu fertigenden Zahnlücke, eine Draufsicht auf die zu fertigenden Zahnlücke, und die entsprechenden Projektionen der Vektoren in einer nebenstehenden Abbildung umfasst, wobei es um die Darstellung der Teilschritte eines optimierten Verfahrens geht.

### Detaillierte Beschreibung

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäß anzuwenden.

Es geht hier um ein spanabhebendes Verfahren, bei dem ein Schneidwerkzeug 40 zum Einsatz kommt, das mindestens zwei Hauptschneiden 42, 43 aufweist. Diese Hauptschneiden 42, 43 können an einem vollschneidenden Messer des Werkzeugs 40 sitzen, oder es kann sich um Hauptschneiden 42, 43 eines Innenschneiders und eines Aussenschneiders des Werkzeugs 40 handeln. Die entsprechenden Messer oder Schneider 41 des Schneidwerkzeugs 40 ragen bei allen Ausführungsformen im Wesentlichen parallel zur Werkzeugrotationsachse WR oder schräg zu dieser Achse WR aus einer Oberfläche des Werkzeugs 40 heraus. In Fig. 2A ist eine Ausführungsform gezeigt, bei der ein Messer 41 des Werkzeugs 40 parallel zur Werkzeugrotationsachse WR aus dem scheiben-, teller- oder tassenförmigen Grundkörper 44 heraus ragt.

Untersuchungen haben gezeigt, dass es beim Ausführen der spanabhebenden Bearbeitung zu störenden Vibrationen kommen kann. Es konnte ermittelt werden, dass es einen Zusammenhang zwischen dem Auftreten und der Stärke dieser Vibrationen und der sogenannten aktiven (Haupt-) Schneidkantenlänge am Werkzeug 40 gibt. Wenn beim Bearbeiten eine kritische aktive Schneidkantenlänge SKL überschritten wird, steigt die Neigung zum Auftreten von Vibrationen deutlich an. Gemäss Erfindung wurde daher ein spezielles mehrstufiges Tauchverfahren entwickelt, bei dem die relativen Verfahrwege unter Berücksichtigung der erwähnten kritischen aktiven Schneidkantenlänge SKL ermittelt und festgelegt werden, um so das Auftreten von Vibrationen zu verhindern.

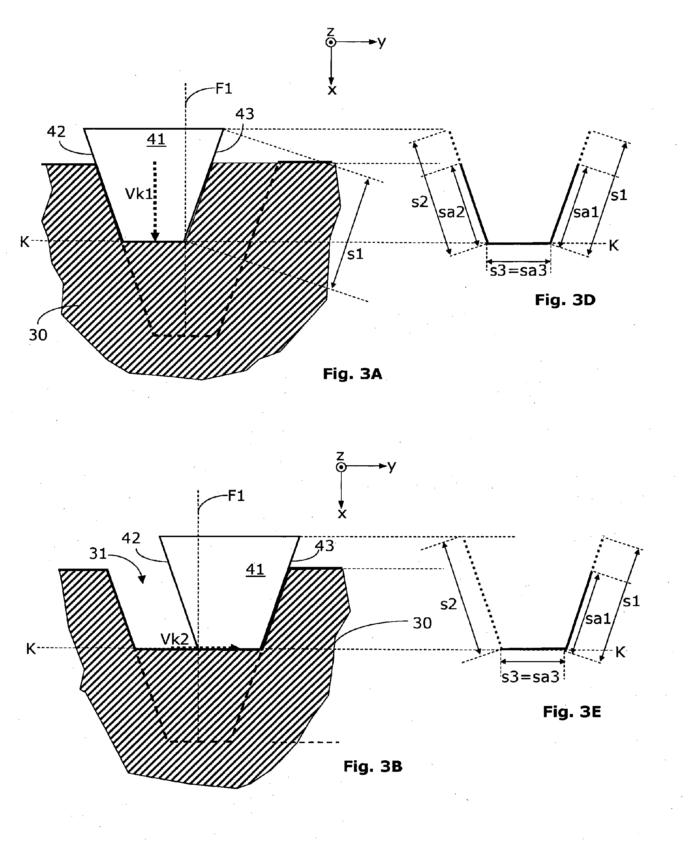

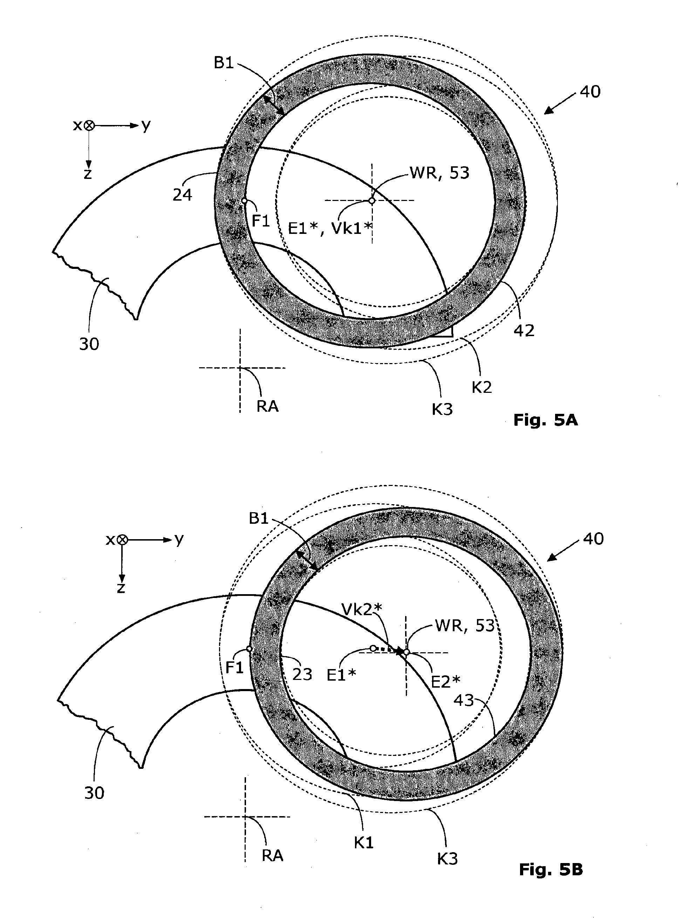

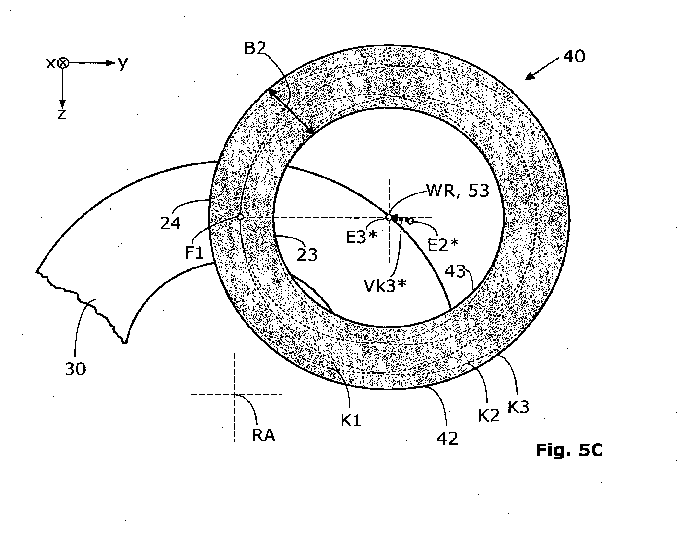

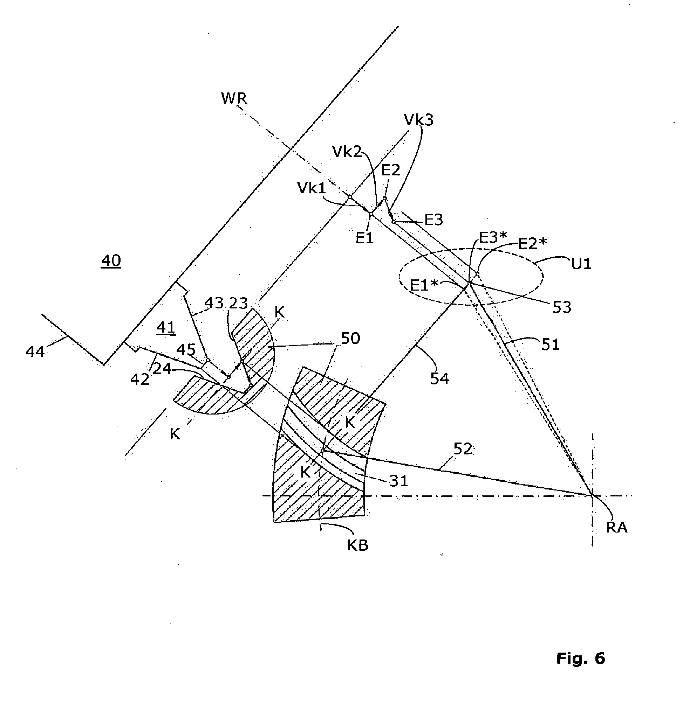

In Fig. 2A ist, wie bereits erwähnt, der Axialschnitt eines beispielhaften und stark schematisierten Werkzeugs 40 gezeigt. Das Werkzeug 40 umfasst einen Grundkörper 44, der bei allen Ausführungsformen teller-, scheiben- oder tassenförmig ausgeführt ist und an dem mindestens ein Schneider oder Messer 41 vorgesehen ist. Der Einfachheit halber ist in den Figuren 2 sowie 3A - 3C ein Messer oder Schneider 41 mit symmetrischem Profil gezeigt. Das Werkzeug 40 weist eine Werkzeugrotationsachse WR auf, die mit einer Rotationsachse der Werkzeugspindel einer entsprechenden NC-Bearbeitungsmaschine zusammenfällt. Das Werkzeug 40 hat hier eine Schneidkantenlänge SL, die sich aus den drei Teilkantenlängen s1, s2, s3 zusammensetzt, wie in Fig. 2B gezeigt. Es gilt: SL= s1 + s2 + s3. Da es sich hier um ein Werkzeug 40 mit symmetrischem Profil handelt, gilt in diesem Sonderfall s1 = s2. In den Figuren 5 und 6 sind Werkzeuge 40 mit asymmetrischem Profil gezeigt.

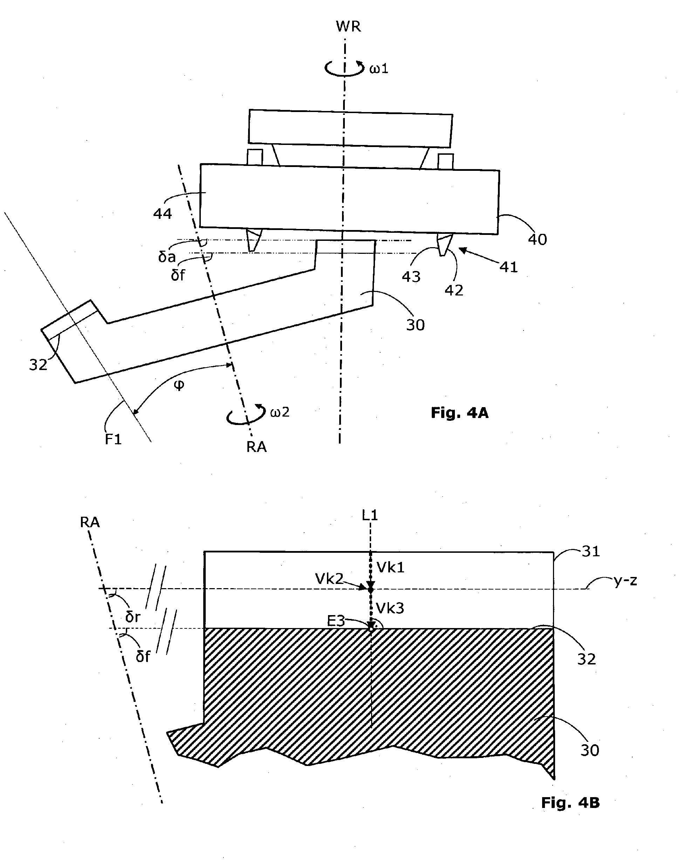

Anhand der Figuren 3A bis 3G werden nun Details eines ersten erfindungsgemässen Verfahrens beschrieben, wobei in den Figuren 3A bis 3C ein schematisierter Schnitt in einer Tangentialebene der herzustellenden Verzahnung durch einen kleinen Abschnitt eines Werkstücks 30 gezeigt ist. Die erwähnte Tangentialebene wird definiert durch die Senkrechte des Fusskegels, die die Schnittlinie F1 einer Werkstück-Kegelmantelfläche mit der Tangentialebene bildet. Die Werkstück-Kegelmantelfläche hat einen Kegelwinkel ϕ, der in Fig. 4A gezeigt ist.

Die eigentliche Krümmung des Werkstücks 30 ist in diesen schematisierten Darstellungen nicht gezeigt. Ausserdem ist nur ein einzelner Zahn bzw. ein einzelnes Messer 41 des Werkzeugs 40 zu erkennen. Sowohl die zu fertigende Zahnlücke 31 als auch der Zahn bzw. das Messer 41 haben im gezeigten Beispiel eine symmetrische Form.

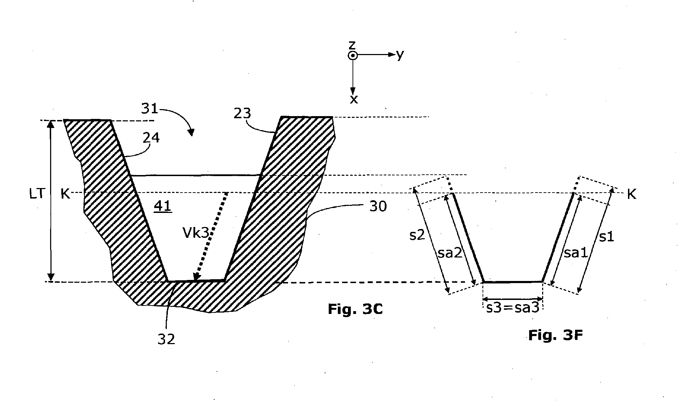

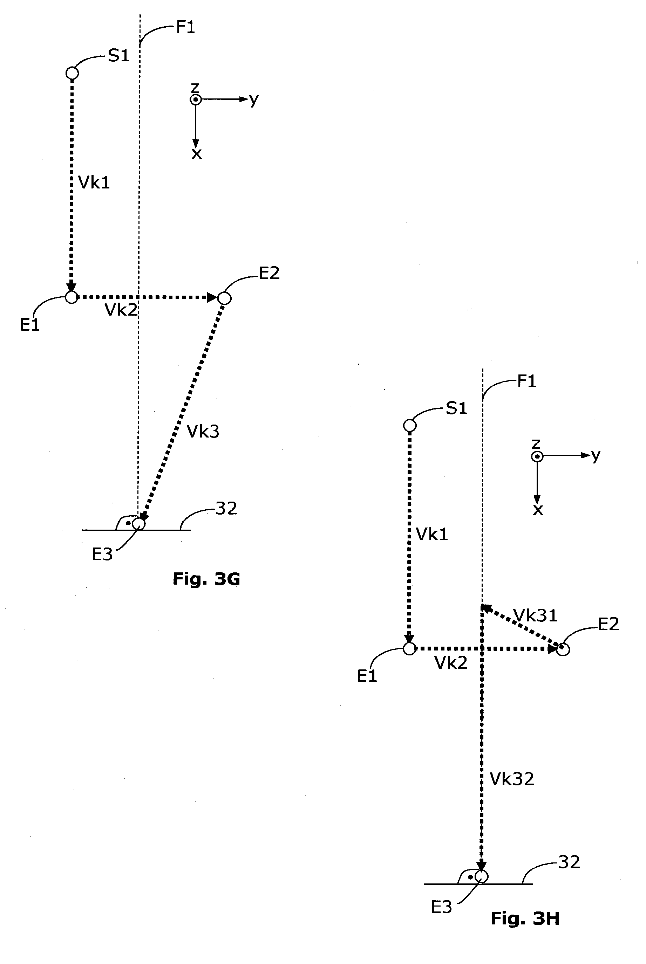

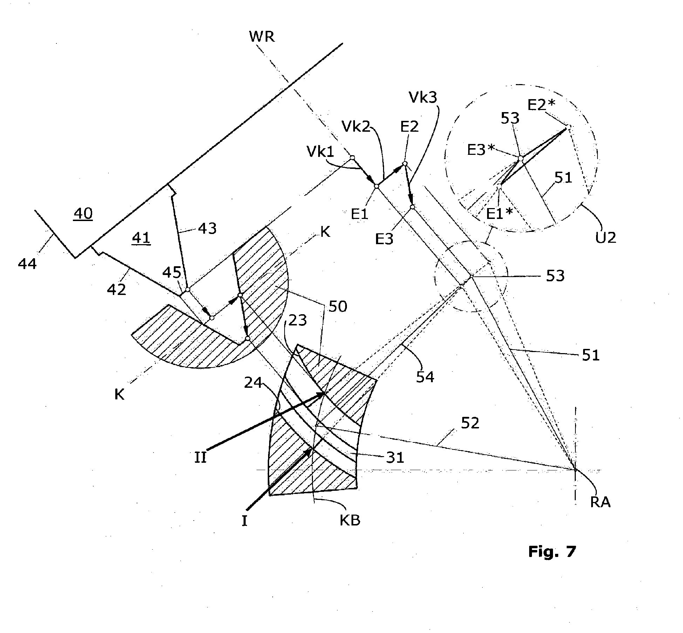

Das Verfahren der Erfindung ist speziell zum spanabhebenden Fertigen mindestens einer Zahnlücke 31 eines Kegelrad- oder Hypoidrad-Werkstücks 30 ausgelegt und umfasst mindestens die folgenden Schritte:
- Drehen des Werkzeugs 40 mit mindestens zwei Hauptschneiden 42, 43 um die Werkzeugrotationsachse WR während des Ausführens der nachfolgenden Teilschritte.
- Relatives Zustellen des Werkzeugs 40 in Bezug zu dem Werkstück 30, um mindestens eine der mehreren Hauptschneiden 42, 43 des Werkzeugs 40 mit dem Werkstück 30 in Kontakt zu bringen. Dieser Schritt ist nicht in den Figuren gezeigt und kann auf verschiedene Art und Weise durch geeignetes Ansteuern der NC-Achse(n) der Bearbeitungsmaschine ausgeführt werden.
- Ausführen einer ersten relativen linearen Tauchbewegung entlang eines ersten Tauchvektors Vk1 (senkrecht zum Fusskegelwinkel δf des Kegelrad- oder Hypoidrad-Werkstücks 30, bzw. parallel zur x-Achse des in Fig. 3A gezeigten Koordinatensystems), der einen Endpunkt E1 (siehe Fig. 3G) der ersten Tauchbewegung festlegt, der an einer Position des Werkstücks 30 liegt, die mehr als 10 Prozent (vorzugsweise mehr als 40 Prozent) der Lückentiefe LT der zu fertigenden Zahnlücke 31 beträgt. In Fig. 3A ist das Ausführen der ersten relativen linearen Tauchbewegung entlang des ersten Tauchvektors Vk1 durch einen abwärts weisenden, punktierten Pfeil angedeutet. Zur besseren Veranschaulichung der Erfindung ist sowohl in Fig. 3A als auch in Fig. 3B der Umriss der zu fertigenden Zahnlücke 31 durch eine gestrichelte Linie angedeutet.
- Ausführen einer relativen linearen Querbewegung entlang eines Quervektors Vk2. In den Figuren 5A, 5B, 5C, 6 und 7 ist zu erkennen, dass sich der Messerkopfmittelpunkt 53 von E1 nach E2 und von E2 nach E3 jeweils auf einer Geraden bewegt. Die Punkte, die beim Erreichen der Endpunkte E1 und E2 an den Zahnflanken 23, 24 berührt werden, liegen bei Fig. 7 auf dem gleichen Teilkreisradius. In Fig. 6 liegen die Punkte, die beim Erreichen der Endpunkte E1, E2 und E3 an den Zahnflanken 23, 24 berührt werden, hingegen in einer Ebene. Der Quervektor Vk2 verläuft optimaler Weise so, dass die Punkte, die beim Erreichen der Endpunkte E1 und E2 an den Zahnflanken 23, 24 berührt werden, auf dem gleichen Teilkreisradius liegen (der entsprechende Teilkreis ist in Fig. 7 durch einen Kreisbogen KB angedeutet und der entsprechende Teilkreisradius ist mit dem Bezugszeichen 52 bezeichnet). Der zweite Teilschritt ist in Fig. 3B schematisch gezeigt.
- Es folgt dann das Ausführen einer zweiten relativen Tauchbewegung entlang eines Vektorpfads Vk3, der sich, projiziert in die Tangentialebene schräg zu der Senkrechten des Fusskegels des zu bearbeitenden Werkstücks 30 erstreckt, wie in Fig. 3C und 3G gezeigt, oder der sich aus zwei Teilvektoren Vk31 und Vk32 zusammensetzt, wie in Fig. 3H gezeigt. Die zweite relative Tauchbewegung erfolgt bei allen Ausführungsformen durch eine Überlagerung einer Bewegung parallel zur x-Achse des in Fig. 3C gezeigten Koordinatensystems und einer Bewegung in der y-z-Ebene dieses Koordinatensystems. Die zweite relative Tauchbewegung hat bei allen Ausführungsformen einen Endpunkt E3, der an einer Position des Werkstücks 30 liegt, die in etwa der Lückentiefe LT und Lückenmitte der zu fertigenden Zahnlücke 31 entspricht. Die zweite relative Tauchbewegung mit nur einem Vektor Vk3 ist in Fig. 3C gezeigt.

In den Figuren 3D, 3E und 3F sind jeweils nur die Schneidkantenlängen und die aktiven Schneidkantenlängen der Teilschritte der Figuren 3A, 3B und 3C gezeigt. Die Gesamtlänge der Schneidkanten SL setzt sich in dem gezeigten Beispiel vereinfacht betrachtet aus den Teilkantenlängen s1, s2, s3 nach folgender Addition zusammen: SL = s1 + s2 + s3. Die aktive Schneidkantenlänge SKL ergibt sich vereinfacht betrachtet aus folgender Addition: SKL = sa1 + sa2 + sa3.

Die Fig. 3G zeigt eine schematische Vektordarstellung der erwähnten Verfahrens(teil)schritte der Erfindung in einer Ebene (analog zu den Figuren 3A, 3B und 3C), wobei es sich genau genommen um eine Projektion der Vektoren Vk1, Vk2 und Vk3 in die Zeichenebene handelt. Nicht alle drei Vektoren Vk1, Vk2, Vk3 oder Vk31 und Vk32 müssen zwingend in der selben Ebene liegen.

In Fig. 3A sind die beiden Hauptschneiden 42 und 43 des Messers oder Schneiders 41 gezeigt. Die erste Hauptschneide 42 ist zum Bearbeiten der konkaven Zahnflanken und die zweite Hauptschneide 43 zum Bearbeiten der konvexen Zahnflanken der Zahnlücke 31 ausgelegt. Ausserdem umfasst das Messer oder der Schneider 41 eine Kopfschneide, die in Fig. 2A mit dem Bezugszeichen 45 versehen ist.

Beim Ausführen der ersten Tauchbewegung (erster Teilschritt) kommen sowohl die erste(n) Hauptschneide(n) 42, die zweite(n) Hauptschneide(n) 43 als auch die Kopfschneide(n) 45 zum Einsatz und heben Späne ab. Beim Ausführen der ersten Tauchbewegung wird jedoch darauf geachtet, dass das Werkzeug 40, respektive die Hauptschneiden 42, 43 des Werkzeugs 40 maximal so weit eintauchen, dass die kritische aktive Schneidkantenlänge SKL nicht überschritten wird. Das Beispiel in Fig. 3A wurde so gewählt, dass die aktive Schneidkantenlänge SA kleiner gleich der kritischen aktiven Schneidkantenlänge SKL beträgt und hier in diesem Beispiel bei ca. 80% der Gesamtlänge SL der Hauptschneiden 42, 43 und Kopfschneide 45 liegt. D.h. SKL = 0,8 SL. Während des ersten Teilschritts kommen beim Ausführen der ersten Tauchbewegung nur ein Stück mit sa1 < s1 der Hauptschneide 43, ein Stück mit sa2 < s2 der Hauptschneide 42 und die gesamte Kopfschneide 45 mit s3 = sa3 zum Einsatz. Daher ist während des ersten Teilschritts die aktive Schneidkantenlänge SA stets kleiner als die kritische aktive Schneidkantenlänge SKL.

Bei dem besagten ersten Teilschritt wird das Werkzeug 40 so relativ zum Werkstück 30 geführt, dass im zahnkopfnahen Bereich der Zahnlücke 31 die erste Zahnflanke (hier die konkave Zahnflanke 24) entlang einer Linie auf das gewünschte Sollmass gebracht wird. Bei der genannten Linie handelt es sich vorzugsweise um die Schnittlinie der Werkstück-Kegelmantelfläche mit dem Sollprofil der ersten Zahnflanke 24. Auf der restlichen ersten Zahnflanke befindet sich noch ein Aufmass an Material.

In Fig. 3D sind sowohl die Abmessungen der einzelnen Schneiden 42, 43, 45 des ersten Teilschritts nach Fig. 3A als auch die momentan im ersten Teilschritt wirksamen aktiven Schneidkantenlängen sa1, sa2, sa3 angedeutet. Es gilt SL = s1 + s2 + s3 und SA = sa1 + sa2 + sa3, wobei SA ≤ SKL < SL.

Beim Ausführen der relativen Querbewegung (zweiter Teilschritt) hebt/heben hauptsächlich die zweite(n) Hauptschneide(n) 43 Späne ab, wie man in Fig. 3B erkennen kann. In diesem Zusammenhang ist zu erwähnen, dass aufgrund der schematisierten Darstellungen der Zahnfuss 32 als gerade Linie gezeigt ist. In der Realität ist der Zahnfuss 32 bei einem Tellerrad in Teilungsrichtung leicht gekrümmt.

Beim Ausführen der relativen Querbewegung erfolgt vorzugsweise keine Tiefenzustellung in x-Richtung.

Bei dem besagten zweiten Teilschritt wird das Werkzeug 40 so relativ zum Werkstück 30 geführt, dass im zahnkopfnahen Bereich der Zahnlücke 31 die zweite Zahnflanke (hier die konvexe Zahnflanke 23) entlang einer Linie auf das gewünschte Sollmass gebracht wird. Bei der genannten Linie handelt es sich vorzugsweise um die Schnittlinie der Werkstück-Kegelmantelfläche mit dem Sollprofil der zweiten Zahnflanke 23. Auf der restlichen zweiten Zahnflanke befindet sich noch ein Aufmass an Material.

In Fig. 3E sind sowohl die Abmessungen der einzelnen Schneiden 42, 43, 45 des zweiten Teilschritts nach Fig. 3B als auch die momentan im zweiten Teilschritt wirksamen aktiven Schneidkantenlängen sa1, sa2, sa3 angedeutet. Es gilt SL = s1 + s2 + s3 und SA = sa1 + sa3. Die aktive Schneidkantenlänge SA ist hier deutlich kürzer als SA in Fig. 3D. Damit ist auch hier die Bedingung erfüllt, dass SA ≤ SKL < SL sein muss.

Je nach Auslegung kann beim zweiten Teilschritt die Kopfschneide 45 ganz (d.h. s3=sa3) oder nur teilweise (d.h. sa3 < s3) zum Einsatz kommen.

Beim Ausführen der zweiten relativen Tauchbewegung entlang des Vektorpfads Vk3 oder der Vektorpfade Vk31 und Vk32 (dritter Teilschritt) heben sowohl die erste(n) Hauptschneide(n) 42 als auch die zweite(n) Hauptschneide(n) 43 und die Kopfschneide 45 Späne ab.

Bei dem besagten dritten Teilschritt wird das Werkzeug 40 so relativ zum Werkstück 30 geführt, dass beide Zahnflanken 23, 24 entweder komplett fertig bearbeitet werden (d.h. auf das gewünschte Sollmass gebracht werden), oder das nur geringe Kanten oder Übergänge stehen bleiben, die durch eine Nachbearbeitung beseitigt werden können..

In Fig. 3F sind sowohl die Abmessungen der einzelnen Schneiden 42, 43, 45 des dritten Teilschritts nach Fig. 3C als auch die momentan im dritten Teilschritt wirksamen aktiven Schneidkantenlängen sa1, sa2, sa3 stark schematisiert und zusammenfassend angedeutet. Es gilt SL = s1 + s2 + s3 und SA = sa1 + sa2 + sa3. Die aktive Schneidkantenlänge SA ist hier etwas länger als SA in Fig. 3D (sa1 und sa2 sind in Fig. 3F etwas länger als sa1 und sa2 in Fig. 3D). Auch hier ist die Bedingung erfüllt, dass SA ≤ SKL < SL ist. Es liegt auf der Hand, dass besonders beim dritten Teilschritt, je nach Auslegung, sich die aktive Schneidkantenlänge SA je nach Verfahrensführung zeitlich ändert.

Für alle Verfahrensschritte der Erfindung gilt, dass die aktive Schneidkantenlänge SA, d.h. die in jedem Moment wirksame gesamte Schneidkantenlänge, stets kleiner gleich SKL ist. D.h. es gilt hier stets SA ≤ SKL < SL.

Wenn man im ersten Teilschritt nach Fig. 3A etwas tiefer eintauchen würde als gezeigt, dann wäre SA in Fig. 3F in etwa gleich lang wie SA in Fig. 3D. In diesem Fall wäre nämlich Vk1 länger und Vk3 kürzer als gezeigt.

In Fig. 3H ist ein alternativer dritter Teilschritt gezeigt. Bei dem alternativen dritten Teilschritt setzt sich der Vektorpfad Vk3 aus zwei Teilvektoren Vk31 und Vk32 zusammen, wie in der Figur angedeutet. Der erste Teilvektor Vk31 verläuft schräg rückwärts in der Zahnlücke 31 (d.h. aus der Zahnlücke 31 heraus) und wird daher auch als relative Rückzugsbewegung des Werkzeugs 40 bezeichnet. Der zweite Teilvektor Vk32 verläuft linear in Richtung des Zahnfusses 32 der zu fertigenden Zahnlücke 31 und erreicht den selben Endpunkt E3, wie das in Fig. 3G gezeigte alternative Verfahren. Der Endpunkt E3 liegt wiederum auf der Schnittlinie F1, d.h. auf der Senkrechten des Kegelfusses.

Fig. 4B zeigt einen schematischen, stark vergrösserten Ansicht einer der Zahnlücken 31 und einen Schnitt durch einen Teil des Werkstücks 30 nach Fig. 4A. Um die drei beschriebenen Teilschritte aufzuzeigen, sind in Fig. 4B die entsprechenden Vektoren eines vereinfachten Verfahrens der Erfindung als Projektion in die Zeichenebene dargestellt. Der erste lineare Tauchvektor Vk1 liegt eigentlich hinter der Zeichenebene der Fig. 4B und ist in der Projektion als gerade Linie zu sehen. Der erste Tauchvektor Vk1 verläuft im Wesentlichen parallel zur Senkrechten L1 des Fusskegels, der durch den Fusskegelwinkel δf definiert ist. Der Quervektor Vk2 durchdringt im gezeigten Beispiel entlang einer Geraden (entspricht dem Schneidenradius 54 in Fig. 6) von hinten nach vorne die Zeichenebene (oder je nach Drehrichtung von vorne nach hinten), verläuft in der y-z-Ebene (falls keine x-Zustellung erfolgt), die in Fig. 4B durch die strichlierte Schnittlinie mit der Zeichenebene dargestellt ist, und ist in der Projektion nur ein schwarz dargestellter Punkt. Der zweite Tauchvektor Vk3 des Vektorpfads liegt in der gezeigten Projektion in der Zeichenebene in der Verlängerung des Vektors Vk1 und endet am Fusskegel (Zahnfuss 32). Der Endpunkt E3 liegt auf der Senkrechten L1.

In den Figuren 4A und 4B ist die Anwendung der Erfindung auf ein Tellerrad als Werkstück 30 gezeigt. Der erste Tauchvektor Vk1 verläuft im Wesentlichen senkrecht auf dem Fusskegel des zu bearbeitenden Werkstücks 30 zu (d.h. parallel zur Senkrechten L1), wobei der erste Tauchvektor Vk1 mit der Werkstückrotationsachse RA je nach Tellerrad 30 und Gesamtkonstellation einen spitzen Winkel ϕ einschliesst, der zum Beispiel zwischen -15 und +15 Grad beträgt. Der Winkel ϕ hängt im Endeffekt vom Fußkegelwinkel δf ab.

Fig. 5A bis 5C zeigen jeweils eine schematische und stark vereinfachte Draufsicht eines Teils eines Planrads eines Kegelradwerkstücks 30 zur Illustration des ersten bis dritten Verfahrensschritts der Erfindung. Hier ist bewusst ein Planrad gezeigt, um die Darstellung übersichtlicher und klarer zu machen. Die Darstellungen sind stark vereinfacht und es sind daher z.B. keine verdeckten Kanten und dergleichen gezeigt.

Fig. 5A zeigt ein Pedant zu Fig. 3A. Da das Werkzeug 40 nur bis zur (Teil-)Ebene K eingetaucht ist, entspricht die Breite des grau dargestellten Rings in Radialrichtung in etwa der Kopfbreite B1 der Kopfschneide 45 (siehe auch Fig. 2A). Der große Kreisring K3 ist in den Figuren 5A bis 5C die Darstellung der konkaven und konvexen Messerbahn (Flugkreisbahn) des in Fig. 5C gezeigten dritten Teilschritts. Der kleine Kreisring K2 ist in den Figuren 5A und 5C die Darstellung der konkaven und konvexen Messerbahn (Flugkreisbahn) des in Fig. 5B gezeigten zweiten Teilschritts und der kleine Kreisring K1 ist in den Figuren 5B und 5C die Darstellung der konkaven und konvexen Messerbahn (Flugkreisbahn) des in Fig. 5A gezeigten ersten Teilschritts.

Das Werkzeug 40 bearbeitet in dem in Fig. 5A gezeigten Moment eine konkave Zahnflanke 24 des Werkstücks 30. In Fig. 5A ist die Lage des Werkzeugs 40 beim zweiten und beim dritten Teilschritt durch die strichlierten Kreisringe K2 und K3 angedeutet.

Um die Vektoren Vk2, VK3 besser grafisch darstellen zu können, wurden diese Vektoren in den Mittelpunkt (Mittelpunkt 53 des Werkzeugs/Messerkopfs 40) der Kreisringe gelegt. Die entsprechenden Vektoren und Punkte, die sich auf die Lage des Mittelpunkts 53 und die Bewegungen dieses Mittelpunkt 53 beziehen, sind in den Figuren 5A - 5C mit einen "*" gekennzeichnet, um sie von den anderen Vektoren und Punkten unterscheiden zu können. In Fig. 5A ist der Endpunkt E1* des ersten Vektors Vk1* gezeigt. Im gezeigten Sonderfall verläuft der Vektor Vk1* parallel zur Werkzeugrotationsachse WR und fällt daher in der Draufsicht mit dem Endpunkt E1* zusammen. Zur besseren Veranschaulichung ist in den Figuren 5A - 5C auch die Schnittlinie F1 durch einen kleinen weißen Kreis angedeutet. Diese Schnittlinie F1 fällt, wie erwähnt, mit der Senkrechten auf dem Fusskegel zusammen. Die Schnittlinie F1 liegt bei einer symmetrischen Zahnlücke 31 mittig zwischen den beiden Flanken 23, 24 und, da es sich um die vereinfachende Darstellung eines Planrades handelt, senkrecht zur Zeichenebene.

Die Querbewegung des zweiten Teilschritts ist in Fig. 5B durch den Quervektor Vk2* dargestellt, der ausgehend vom Endpunkt E1* zum Endpunkt E2* führt. Der Messerkopfmittelpunkt 53 bewegt sich von E1* nach E2* und von E2* nach E3* jeweils auf einer Geraden. Die Punkte, die beim Erreichen der Endpunkte E1* und E2* an den Zahnflanken 23, 24 berührt werden, liegen vorzugsweise auf dem gleichen Teilkreisradius. Da beim zweiten Teilschritt normalerweise kein Eintauchen parallel zur x-Achse erfolgt, verändert sich die Breite des grau dargestellten Rings nicht (der graue Ring in Fig. 5A hat die gleiche Breite B1 wie der graue Ring in Fig. 5B). Der grau dargestellte Ring wird in der gezeigten Ansicht in der y-z-Ebene entlang des Quervektors Vk2* weiter nach rechts (parallel zur y-Achse) und nach unten (parallel zur z-Achse) verlagert und bearbeitet im gezeigten Moment eine konvexe Zahnflanke 23.

Im Rahmen des dritten Teilschritts, dessen Endpunkt E3* der Bewegung in Fig. 5C dargestellt ist, taucht das Werkzeug 40 auf direktem oder indirektem (2-stufigen) Weg tiefer in das Material des Werkstücks 30 ein. In der (Teil-)Ebene K ist daher die Breite B2 des hellgrau dargestellten Rings in Fig. 5C in Radialrichtung deutlich grösser als die Kopfbreite B1 der Kopfschneide 45.

Anhand der Figuren 6 und 7 werden nun die Verfahrensschritte der Erfindung anhand von zwei konkreten Beispielen näher erläutert. Die Zahnlücke 31 und das Messer oder der Schneider 41 sind in diesen beiden Fällen asymmetrisch.

Fig. 6 zeigt eine Darstellung, die einerseits links oben einen Schnitt entlang der Linie K-K durch ein Planrad 50 mit einer zu fertigenden Zahnlücke 31 und andererseits schräg darunter eine Schnittansicht durch die Teilebene des Werkstücks 30 mit der zu fertigenden Zahnlücke 31 des Planrads 50 zeigt. Das Planrad 50 repräsentiert das Werkstück 30. Anhand von Fig. 6 wird ein Einzelteil-Completing Verfahren beschrieben. Ausserdem sind die entsprechenden Projektionen der Vektoren Vk1, Vk2, und Vk3 in einer nebenstehenden Abbildung (oben rechts) dargestellt, wobei es in Fig. 6 um die Darstellung der Teilschritte eines vereinfachten Verfahrens der Erfindung geht. Im Bereich U1 sind die drei verschiedenen Positionen E1*, E2* und E3* des Mittelpunkts 53 des Werkstücks 40 gezeigt.

Links oben ist in Fig. 6 ein asymmetrisches Messer oder Schneider 41 beim Ausführen der ersten Tauchbewegung gezeigt. An der Kopfschneide 45 ist anhand eines in die Zahnlücke 31 hinein weisenden Pfeils die Bewegung des ersten Teilschritts angedeutet. Dieser Pfeil ist in dem rechts oberhalb befindlichen Vektordiagram als erster Tauchvektor Vk1 bezeichnet. In der gezeigten Darstellung in Fig. 6 ist zu beachten, dass der Pfeil im gezeigten Beispiel nicht mittig an der Kopfschneide 45 sondern im Übergangsbereich zwischen der Kopfschneide 45 und der Hauptscheide 43 ansetzt. Hier ist zu beachten, dass ein Dreieck mit den Schenkeln 51, 52 und 54 in Fig. 7 nur für den Endpunkt E3, respektive für den zugehörigen Mittelpunkt in der Position E3* eingezeichnet sind. Der Schenkel 51 wird üblicherweise als Radiale oder Maschinendistanz bezeichnet. Für den ersten und zweiten Teilschritt sind die entsprechenden Dreiecke aus Gründen der Übersichtlichkeit nicht eingezeichnet. Auch ist es so, dass der Messerkopf(nenn)radius 54 bei allen Schritten konstant bleibt, während sich 52 und/oder 51 ändern/t. Mit dem Bezugszeichen 54 ist eigentlich ein Radius zu einer Messerschneide, also allgemein ein Schneidenradius bezeichnet.

Nach dem ersten Teilschritt folgt eine Querbewegung entlang des Quervektors Vk2. In Fig. 6 wird im Rahmen dieses zweiten Teilschritts die Querbewegung als Linearbewegung entlang des Schneidenradius 54 (Messerkopf(nenn)radius) ausgeführt. D.h. die Punkte E1*, E2* und E3* liegen allesamt auf einer Geraden. Dann folgt als weiterer Teilschritt eine Tauchbewegung entlang des Vektors Vk3. Bei der gezeigten vereinfachten Ausführungsform liegen alle drei Vektoren Vk1, Vk2 und Vk3 in einer gemeinsamen Ebene, deren Durchtritt durch die Zeichenebene (Schnittlinie mit der Zeichenebene) in Fig. 6 im Bereich U1 zu erkennen ist.

Bei dem vereinfachten Verfahren der Erfindung, das in Fig. 6 gezeigt ist, liegen die Berührpunkte der Schneiden 42, 43 des Werkzeugs 40 und dem Material des Werkstücks 30 (hier durch ein Planrad 50 dargestellt) nicht am optimalen Punkt. Die Auslegung des vereinfachten Verfahrens der Erfindung erfolgt hier indem eine Normale auf die Flankenlängslinie der konkaven Flanke so gelegt wird, dass sie den mittleren Teilkreis (hier KB) in der Mitte der Zahnlückenweite schneidet. Statt bei der Auslegung auch die Endpunkte E1, E2 auf den Kreisbogen KB (d.h. auf den mittleren Teilkreis mit Radius 52) zu legen, liegen diese beiden Endpunkte E1, E2 auf dem erwähnten Schneidenradius 54 (Messerkopf(nenn)radius).

In Fig. 7 ist ein optimierter Ansatz des Verfahrens der Erfindung gezeigt. Bei der Auslegung des Verfahrens nach Fig. 7 wurden die Berührpunkte der Schneiden 42, 43 des Werkzeugs 40 und dem Material des Werkstücks 30 so gelegt, dass im Bereich einer Linie nur wenig oder gar kein Aufmass gegenüber dem Sollmass der Flanken 23, 24 stehen bleibt. Bei dem in Fig. 7 gezeigten Ansatz liegt diese Linie in dem mit I bezeichneten Bereich an der Flanke 24 des Planrads 50 und verläuft vom Zahnkopf zum Zahnfuss. Beim Ausführen der Querbewegung folgt der Mittelpunkt 53 des Messerkopfs 40 einer Geraden bis zu einem Berührpunkt der anderen Flanke 23. Der entsprechende Bereich ist mit II bezeichnet. Auch hier bleibt im Bereich einer Linie nur wenig oder gar kein Aufmass gegenüber dem Sollmass der Flanke 23 stehen. Erst dann folgt der dritte Teilschritt durch ein Bewegen entlang des Vektors Vk3. Der Unterschied zu Fig. 6 ist, dass die "Aufteilung" des Aufmaßes in Zahnbreitenrichtung in Fig. 7 viel gleichmäßiger ist, da die "Linie ohne Aufmaß" an beiden Flanken 23, 24 in etwa in Zahnmitte liegt. Bei Fig. 6 sind sie aus der Mitte jeweils zur Zehe oder Ferse verschoben, was an einem der beiden "Zahnenden" ein größeres Restaufmaß bringt.

Rechts aussen ist in Fig. 7 in einer Ausschnittvergrösserung im Bereich U2 die entsprechende Anordnung der drei Punkte E1*, E2* und E3* gezeigt. Links neben der Ausschnittvergrösserung U2 ist das entsprechende Vektordiagramm dargestellt. Fig. 4A zeigt eine schematische Illustration eines Messerkopf-Werkzeugs 40 im Werkstück-Axialschnitt beim Eingriff in ein Tellerrad-Werkstück 30. Das Tellerrad-Werkstück 30 weist hier eine konstante Zahnhöhe auf, d.h. der Kopfkegelwinkel δa und der Fusskegelwinkel δf sind hier in dem gezeigten Sonderfall gleich. Das Messerkopf-Werkzeug 40 ist mit mehreren Messern 41 bestückt, von denen in der gezeigten Darstellung nur zwei um 180 Grad im Bezug zum Grundkörper 44 beabstandet stehende Messer 41 gezeigt sind. Die gezeigten Messer 41 haben diesmal kein symmetrisches Profil. An einem der beiden Messer 41 sind die erste Schneidkante 42 und die zweite Schneidkante 43 (auch Hauptschneiden genannt) bezeichnet. Wenn das Werkzeug 40 um die Werkzeugrotationsachse WR drehend angetrieben wird, wie durch den Rotationspfeil ω1 bezeichnet, dann schneiden die nach Innen weisenden zweiten Hauptschneiden 43 die konvexen Zahnflanken 23 der Zahnlücken 31 und die nach Aussen weisenden ersten Hauptschneiden 42 die konkaven Zahnflanken 24.

Die Bearbeitungsmaschine ist so ausgelegt und das Werkstück 30 ist so in der Bearbeitungsmaschine aufgespannt, dass das Werkstück 30 um die Werkstückrotationsachse RA drehangetrieben werden kann, wie durch den Rotationspfeil ω2 bezeichnet.

Beim Ausführen der ersten relativen linearen Tauchbewegung (siehe z.B. Fig. 3A) entlang des ersten Tauchvektors Vk1 werden beide Hauptschneiden 42, 43 und die Kopfschneide 45 der Messer oder Schneider 41 des Werkzeugs 40 mehr oder weniger gleichmässig belastet, da die auftretenden Druckwinkel mehr oder weniger gleich sind. Ausserdem wird speziell in dieser Phase, wie auch im dritten Teilschritt, darauf geachtet, dass die aktive Schneidkantenlänge SA am Werkzeug 40 nicht die kritische aktive Schneidkantenlänge SKL überschreitet. Während der Querbewegung (siehe z.B. Fig. 3B) werden hauptsächlich nur die Schneidkante 43 und ein mehr oder weniger grosser Teil der Kopfschneide 45 belastet. Da hier normalerweise keine Tauchbewegung (d.h. kein tieferes Eintauchen parallel zur x-Achse des Koordinatensystems) erfolgt, überschreitet die aktive Schneidkantenlänge SA am Werkzeug 40 bei weitem nicht die kritische aktive Schneidkantenlänge SKL. Auch während des dritten Teilschritts (siehe z.B. Fig. 3C) muss besonders darauf geachtet werden, dass die aktive Schneidkantenlänge SA am Werkzeug 40 nicht die kritische aktive Schneidkantenlänge SKL überschreitet.

Bei dem in den Figuren 3A bis 3C gezeigten Beispiel ist die Länge des Tauchvektors Vk3 grösser als die Länge des Tauchvektors Vk1. D.h. beim Ausführen des dritten Teilschritts ist die aktive Schneidkantenlänge SA etwas grösser als beim ersten Teilschritt. Wenn sich der Vektorpfad des dritten Teilschritts aus zwei Teilvektoren Vk31 und Vk32 zusammensetzt, wie in Fig. 3H gezeigt, dann ist der dritte Teilvektor Vk32 sogar deutlich länger als der Tauchvektor Vk1.

Vorzugsweise werden der Verfahrensablauf und die NC-gesteuerten Relativbewegungen in der Bearbeitungsmaschine so ausgelegt/vorgegeben, dass die aktive Schneidkantenlänge SA beim ersten Teilschritt in etwa der aktiven Schneidkantenlänge SA des dritten Teilschritts, respektive des dritten Teilvektors Vk32 des dritten Teilschritt entspricht.

Der Endpunkt E1 der ersten Tauchbewegung liegt vorzugsweise bei allen Ausführungsformen an einer Position des Werkstücks 30, die zwischen mindestens 10 Prozent und vorzugsweise zwischen 40 und 60 Prozent der Lückentiefe LT der zu fertigenden Zahnlücke 31 (in Richtung der Normalen L1 zum Fusskegelwinkel betrachtet) beträgt. Der Endpunkt E1 wird dabei vorzugsweise so gewählt, dass eine möglichst gleichmässige Schnittaufteilung zwischen den drei Teilschritten und Belastung des Werkzeugs 40 erzielt wird.

Vorzugsweise verläuft bei allen Ausführungsformen der Quervektor Vk2 so entlang einer Geraden, dass er ausgehend vom Endpunkt E1 des ersten Vektors Vk1 in der γ-z-Ebene liegend (falls keine x-Zustellung erfolgt) auf die zweite Zahnflanke 23 der zu fertigenden Zahnlücke 31 zuläuft.

Vorzugsweise wird die Erfindung so implementiert, dass sich die Bewegung des ersten Teilschritts durch eine lineare (Schlitten-)Bewegung des Werkzeugs 40 in Richtung des Werkstücks 30 ergibt. Die Bewegung des zweiten Teilschritts wird vorzugsweise durch eine Überlagerung von zwei linearen

(Schlitten-)Bewegungen des Werkzeugs 40 in der γ-z-Ebene erzeugt. Die Bewegung(en) des dritten Teilschritts kann/können durch eine Überlagerung von drei linearen (Schlitten-)Bewegungen des Werkzeugs 40 in Richtung des Werkstücks 30 erzeugt werden.

Das Verfahren der Erfindung kommt auf einer NC-gesteuerten Bearbeitungsmaschine zum Einsatz. Die NC-gesteuerten Bewegungen der Bearbeitungsmaschine werden vorzugsweise so ausgeführt, dass der Profilschnitt der zweiten Zahnflanke 23, bei dem das selbe endgültige Profil erzeugt wird wie an der ersten Zahnflanke 24, auf der gleichen Kegellänge (d.h. auf dem selben Werkstück-Kegelmantel) wie die erste Zahnflanke 24 liegt. Das optimierte Verfahren, das anhand der Fig. 7 beschrieben wurde, erfüllt diese Vorgabe. Die entsprechende Teilkegellänge (bzw. der entsprechende Planradradius) ist in Fig. 7 mit dem Bezugszeichen 52 bezeichnet.

Vorzugsweise folgt nach dem Ausführen der ersten Tauchbewegung, der Querbewegung und der zweiten Tauchbewegung eine Nachbearbeitung. Dies gilt besonders dann, wenn bei den vorausgehenden ersten bis dritten Teilschritten die Zahnflanken 23, 24 nicht komplett fertig bearbeitet wurden. Bei der Nachbearbeitung wird das Werkstück 30 leicht in positiver und in negativer Drehrichtung (β+ und β- Finishingbewegungen genannt) um die Werkstückrotationsachse RA gedreht, während das Werkzeug 40 weiter um die Werkzeugrotationsachse WR drehangetrieben wird. Durch diese Form der Nachbearbeitung können leichte Kanten und Übergänge beseitigt werden, die sich aufgrund des erfindungsgemässen Verfahrens auf der Oberfläche der Zahnflanken 23, 24 ergeben können. Ausserdem kann ein Aufmass abgetragen werden, das bewusst auf den Zahnflanken 23, 24 stehen gelassen wurde.

Bei dem kontinuierlichen Verfahren hat diese "zusätzliche" Drehung des Werkstücks 30 (zusätzlich zur Teilungsdrehung), die im Rahmen der erwähnten optionalen Nachbearbeitung erfolgt, über die Kopplung zum Messerkopf Auswirkungen auf die Messerkopfdrehung.

Nach dem Fertigen einer Zahnlücke wird das Werkzeug 40 zurück gezogen (relativ betrachtet) und das Werkstück 30 wird schrittweise weitergedreht (Teilungsdrehung genannt), wenn es sich um ein Einzelteilverfahren handelt.

Um den Verschleiß der Hauptschneiden 43, 44 des Werkzeugs 40 gleichmässiger zu gestalten, kann bei allen Ausführungsformen der Erfindung einmal die Bearbeitung der konkaven Zahnflanken 24 mit der Hauptschneide 42 und einmal die Bearbeitung der konvexen Zahnflanken 23 mit der Hauptschneide 43 erfolgen. Dieser Ansatz wird als alternierendes, mehrstufiges Tauchverfahren bezeichnet. Beim Einzelteilverfahren kann dieses Alternieren zwischen den einzelnen aufeinanderfolgend bearbeiteten Lücken eines Kegelradwerkstücks erfolgen, während es beim kontinuierlichen Teilverfahren zwischen aufeinanderfolgend bearbeiteten Kegelradwerkstücken erfolgt.

Die Erfindung lässt sich nicht nur auf symmetrische, sondern auch auf asymmetrische Zahnlücken anwenden, wobei in diesem Fall das Profil der Schneider oder Messer 41 entweder entsprechend asymmetrisch ist, oder das Werkzeug 40 symmetrische Schneider oder Messer 41 aufweist und durch eine Schiefstellung asymmetrische Zahnlücken erzeugt werden.

**Bezugszeichenliste**

| | |
|---|---|
| Kegelradritzel | 11 |
| Zahnlücken | 12 |
| Zähne | 13 |
| Messerkopf | 20 |
| Messer | 21 |
| Zahnlücke | 22 |
| konvexe Zahnflanken | 23 |
| konkave Zahnflanken | 24 |
| | |
| Werkstück | 30 |
| Zahnlücke | 31 |
| Zahnfuss | 32 |
| | |
| Werkzeug | 40 |
| Messer oder Schneider | 41 |
| erste Hauptschneide | 42 |
| zweite Hauptschneide | 43 |
| Grundkörper | 44 |
| Kopfschneide | 45 |
| | |
| Planrad | 50 |
| Radiale oder Maschinendistanz | 51 |
| Radius (Teilkegellänge) | 52 |
| Mittelpunkt des Werkzeugs | 53 |
| Schneidenradius | 54 |
| | |
| 1. Teilungsdrehung | A |
| 2. Teilungsdrehung | B |
| Kopfbreite | B1 |
| Breite | B2 |
| Winkel | β |
| 3. Teilungsdrehung | C |
| Kopfkegelwinkel | δa |
| Fusskegelwinkel | öf |
| Kegelwinkel | δr |
| Endpunkt | E1 |
| Endpunkt | E2 |
| Endpunkt | E3 |
| Endpunkt | E1* |
| Endpunkt | E2* |
| Endpunkt | E3* |
| Schnittlinie | F1 |
| Schnittebene | K |
| Kreisbogen/Teilkegel | KB |
| Kreisbahn | K1 |
| Kreisbahn | K2 |
| Kreisbahn | K3 |
| Senkrechte zum Fusskegelwinkel | L1 |
| Lückentiefe | LT |
| Werkstückrotationsachse | RA |
| aktive Teilkantenlängen | sa1, sa2, sa3 |
| Teilkantenlängen | s1, s2, s3 |
| Startpunkt | S1 |
| aktive Schneidkantenlänge | SA |
| Gesamtlänge der Schneidkanten | SL |
| kritische aktive Schneidkantenlänge | SKL |
| Winkel | ϕ |
| Bereich | U1 |
| Bereich | U2 |
| erster Tauchvektor | Vk1 |
| Quervektor | Vk2 |
| Vektorpfad | Vk3 |
| erster Tauchvektor | Vk1* |
| Quervektor | Vk2* |
| Vektorpfad | Vk3* |
| Erster Teilvektor | Vk31 |
| zweiter Teilvektor | Vk32 |
| Werkzeugrotationsachse | WR |
| Rotationspfeil | ω1 |
| Rotationspfeil | ω2 |
| Koordinatensystem | x-y-z |

## Patentansprüche

1. Verfahren zum spanabhebenden Fertigen mindestens einer Zahnlücke (31) eines Kegelrad- oder Hypoidrad-Werkstücks (30) mit den folgenden Schritten:
- Drehen eines Werkzeugs (40) mit mindestens einer ersten Hauptschneide (42) und einer zweiten Hauptschneide (43) um eine Werkzeugrotationsachse (WR) während des Ausführens der nachfolgenden Teilschritte,
- Ausführen einer ersten relativen linearen Tauchbewegung entlang eines ersten Tauchvektors (Vk1), der sich im Wesentlichen senkrecht zum Fusskegel des Werkstücks (30) erstreckt und der einen Endpunkt (E1) der ersten Tauchbewegung festlegt, der an einer Position des Werkstücks (30) liegt, die mehr als 10 Prozent der Lückentiefe (LT) der zu fertigenden Zahnlücke (31) beträgt, um mit der ersten Hauptschneide (42) primär einen zahnkopfnahen Bereich einer ersten Zahnflanke (24) der Zahnlücke (31) zu bearbeiten,
- Ausführen einer relativen Querbewegung entlang eines Quervektors (Vk2), um die zweite Hauptschneide (43) in Richtung der zweiten Zahnflanke (23) der Zahnlücke (31) zu bewegen und um primär einen zahnkopfnahen Bereich der zweiten Zahnflanke (23) der Zahnlücke (31) zu bearbeiten,
- Ausführen einer zweiten relativen Tauchbewegung entlang eines Vektorpfads (Vk3), der einen Endpunkt (E3) der zweiten Tauchbewegung festlegt, der an einer Position des Werkstücks (30) liegt, die in etwa der Lückentiefe (LT) der zu fertigenden Zahnlücke (31) entspricht.

2. Verfahren nach Anspruch 1, **dadurch gekennzeichnet, dass** der erste Tauchvektor (Vk1) durch eine lineare Vorschubbewegung erzeugt wird.

3. Verfahren nach Anspruch 1 oder 2, **dadurch gekennzeichnet, dass** der Quervektor (Vk2) eine Linearbewegung definiert, die parallel zu dem Messerkopf(nenn)radius (54) verläuft.

4. Verfahren nach Anspruch 1, 2 oder 3, **dadurch gekennzeichnet, dass** es sich bei dem Werkstück (30) um ein Tellerrad handelt und der erste Tauchvektor (Vk1) mit der Werkstückrotationsachse (RA) einen spitzen Winkel (ϕ) einschliesst, der zwischen -15 und +15 Grad beträgt.

5. Verfahren nach Anspruch 1, 2 oder 3, **dadurch gekennzeichnet, dass** der Endpunkt (E1) der ersten Tauchbewegung eine Eintauchtiefe am Werkstück (30) erreicht, die mindestens 40% der Lückentiefe (LT) der zu fertigenden Zahnlücke (31) entspricht.

6. Verfahren nach einem der vorhergehenden Ansprüche, **dadurch gekennzeichnet, dass** der Vektorpfad (Vk3) entweder durch einen einzigen, schräg in Richtung Zahnfuss (32) der zu fertigenden Zahnlücke (31) verlaufenden Vektor (Vk3) definiert ist, oder dass der Vektorpfad (Vk3) durch zwei Teilvektoren definiert ist, bei denen ein erster Teilvektor (Vk31) durch eine schräg verlaufende relative Rückzugsbewegung des Werkzeugs (40) in der Zahnlücke (31) und ein zweiter Teilvektor (Vk32) durch einen linear in Richtung Zahnfuss (32) der zu fertigenden Zahnlücke (31) verlaufenden Vektor definiert ist.

7. Verfahren nach einem der vorhergehenden Ansprüche, **dadurch gekennzeichnet, dass** das Werkzeug (40) erste Hauptschneiden (42) zum Bearbeiten von konkaven Zahnflanken, zweite Hauptschneiden (43) zum Bearbeiten von konvexen Zahnflanken und Kopfschneiden (45) umfasst, wobei beim Ausführen der ersten Tauchbewegung die ersten Hauptschneiden (42), die zweiten Hauptschneiden (43) und die Kopfschneiden (45) Späne abheben.

8. Verfahren nach Anspruch 7, **dadurch gekennzeichnet, dass** beim Ausführen der relativen Querbewegung im Wesentlichen nur die zweiten Hauptschneiden (43) und eventuell die Kopfschneiden (45) Späne abheben.

9. Verfahren nach Anspruch 7, **dadurch gekennzeichnet, dass** beim Ausführen der ersten relativen linearen Tauchbewegung mit der ersten Hauptschneide (42) in dem zahnkopfnahen Bereich der ersten Zahnflanke (24) entlang einer ersten Linie das endgültige Flankenprofil erzeugt wird, und dass beim Ausführen der relativen Querbewegung mit der zweiten Hauptschneide (43) in dem zahnkopfnahen Bereich der zweiten Zahnflanke (23) entlang einer zweiten Linie das endgültige Flankenprofil erzeugt wird, wobei die erste Linie und die zweite Linie auf einer Werkstück-Kegelmantelfläche (KB) des Werkstücks (30) liegen.

10. Verfahren nach einem der vorhergehenden Ansprüche, **dadurch gekennzeichnet, dass** in einem nachgelagerten Schritt das Werkstück (30) zur Nachbearbeitung leicht in positiver und in negativer Drehrichtung um die Werkstückrotationsachse (RA) gedreht wird, während das Werkzeug (40) weiter um die Werkzeugrotationsachse (WR) drehangetrieben wird.

11. Verfahren nach einem der vorhergehenden Ansprüche, **dadurch gekennzeichnet, dass** dieses entweder als Teilverfahren mit intermittierenden Teilungsdrehungen oder als kontinuierliches Verfahren ausgeführt wird.

## Claims

1. A method for the chip-removing manufacturing of at least one tooth gap (31) of a bevel gear workpiece or hypoid gear workpiece (30) having the following steps:
- rotating a tool (40) having at least one first main cutting edge (42) and one second main cutting edge (43) about a tool axis of rotation (WR) during the execution of the following partial steps,
- executing a first relative linear plunging movement along a first plunging vector (Vk1), which extends essentially perpendicularly to the base cone of the workpiece (30) and which establishes one endpoint (E1) of the first plunging movement, which lies at a position of the workpiece (30), which makes up more than 10% of the gap depth (LT) of the tooth gap (31) to be manufactured, in order to primarily machine a region close to the tooth head of a first tooth flank (24) of the tooth (31) using the first main cutting edge (42),
- executing a relative transverse movement along a transverse vector (Vk2), in order to move the second main cutting edge (43) in the direction of the second tooth flank (23) of the tooth gap (31) and in order to primarily machine a region close to the tooth head of the second tooth flank (23) of the tooth gap (31),
- executing a second relative plunging movement along a vector path (Vk3), which establishes one endpoint (E3) of the second plunging movement, which lies at a position of the workpiece (30), which approximately corresponds to the gap depth (LT) of the tooth gap (31) to be manufactured.

2. The method according to Claim 1, **characterized in that** the first plunging vector (Vk1) is produced by a linear advance movement.

3. The method according to Claim 1 or 2, **characterized in that** the transverse vector (Vk2) defines a linear movement, which extends in parallel to the cutter head (nominal) radius (54).

4. The method according to Claim 1, 2, or 3, **characterized in that** the workpiece (30) is a crown gear and the first plunging vector (Vk1) encloses an acute angle (ϕ), which is between -15 and +15°, with the workpiece axis of rotation (RA).

5. The method according to Claim 1, 2, or 3, **characterized in that** the endpoint (E1) of the first plunging movement reaches a plunging depth on the workpiece (30), which corresponds to at least 40% of the gap depth (LT) of the tooth gap (31) to be manufactured.

6. The method according to one of the preceding claims, **characterized in that** the vector path (Vk3) is either defined by a single vector (Vk3) extending diagonally in the direction of the tooth base (32) of the tooth gap (31) to be manufactured, or the vector path (Vk3) is defined by two partial vectors, in which a first partial vector (Vk31) is defined by a relative retraction movement of the tool (40), which extends diagonally, in the tooth gap (31) and a second partial vector (Vk32) is defined by a vector extending linearly in the direction of the tooth base (32) of the tooth gap (31) to be manufactured.

7. The method according to one of the preceding claims, **characterized in that** the tool (40) comprises first main cutting edges (42) for machining concave tooth flanks, second main cutting edges (43) for machining convex tooth flanks, and head cutting edges (45), wherein during the execution of the first plunging movement, the first main cutting edges (42), the second main cutting edges (43), and the head cutting edges (45) remove chips.

8. The method according to Claim 7, **characterized in that** during the execution of the relative transverse movement, essentially only the second main cutting edges (43) and possibly the head cutting edges (45) remove chips.

9. The method according to Claim 7, **characterized in that** during the execution of the first relative linear plunging movement, the final flank profile is produced using the first main cutting edge (42) in the region close to the tooth head of the first tooth flank (24) along a first line, and during the execution of the relative transverse movement, the final flank profile is produced using the second main cutting edge (43) in the region close to the tooth head of the second tooth flank (23) along a second line, wherein the first line and the second line lie on a workpiece conical lateral surface (KB) of the workpiece (30).

10. The method according to one of the preceding claims, **characterized in that** in a subsequent step, the workpiece (30) is slightly rotated in the positive and in the negative rotational direction about the workpiece axis of rotation (RA) for finishing, while the tool (40) is rotationally driven further about the tool axis of rotation (WR).

11. The method according to one of the preceding claims, **characterized in that** it is executed either as an indexing method with intermittent indexing rotations or as a continuous method.

## Revendications

1. Procédé pour fabriquer par enlèvement de copeaux au moins un entredent (31) d'une pièce à usiner de roue conique ou d'engrenage (30) comportant les étapes suivantes consistant à:
- tourner un outil (40) comportant au moins une première lame principale (42) et une deuxième lame principale (43) autour d'un axe de rotation d'outil (WR) pendant la réalisation des étapes partielles suivantes,
- effectuer un premier mouvement d'immersion linéaire relatif le long d'un premier vecteur d'immersion (Vk1) qui s'étend essentiellement perpendiculairement au cône de pied de la pièce à usiner (30) et qui définit un point d'extrémité (E1) du premier mouvement d'immersion, lequel point d'extrémité se situe à une position de la pièce à usiner (30) qui représente plus de 10 pour cent de la profondeur (LT) de l'entredent (31) à réaliser afin d'usiner avec la première lame principale (42) en premier lieu une zone proche de la tête de dent d'un premier flanc de dent (24) de l'entredent (31),
- effectuer un mouvement transversal relatif le long d'un vecteur transversal (Vk2) pour déplacer la deuxième lame principale (43) en direction du deuxième flanc de dent (23) de l'entredent (31) pour usiner en premier lieu une zone proche de la tête de dent du deuxième flanc de dent (23) de l'entredent (31),
- effectuer un deuxième mouvement d'immersion relatif le long d'un tracé vectoriel (Vk3) qui définit un point d'extrémité (E3) du deuxième mouvement d'immersion, lequel point d'extrémité se trouve à une position de la pièce à usiner (30) qui correspond approximativement à la profondeur (LT) de l'entredent (31) à réaliser.

2. Procédé selon la revendication 1, **caractérisé en ce que** le premier vecteur d'immersion (Vk1) est produit par un mouvement d'avance linéaire.

3. Procédé selon la revendication 1 ou 2, **caractérisé en ce que** le vecteur transversal (Vk2) définit un mouvement linéaire qui s'étend parallèlement au rayon (nominal) de la tête de lame (54).

4. Procédé selon la revendication 1, 2 ou 3, **caractérisé en ce que** la pièce à usiner (30) est une couronne de différentiel et **en ce que** le premier vecteur d'immersion (Vk1) renferme avec l'axe de rotation de la pièce à usiner (RA) un angle aigu (ϕ) qui est compris entre -15 et +15 degrés.

5. Procédé selon la revendication 1, 2 ou 3, **caractérisé en ce que** le point d'extrémité (E1) du premier mouvement d'immersion atteint une profondeur d'immersion sur la pièce à usiner (30) qui correspond à au moins 40% de la profondeur (LT) de l'entredent (31) à réaliser.

6. Procédé selon l'une des revendications précédentes, **caractérisé en ce que** le tracé vectoriel (Vk3) est défini soit par un seul vecteur (Vk3) s'étendant de façon oblique en direction du pied de dent (32) de l'entredent (31) à réaliser, ou **en ce que** le tracé vectoriel (Vk3) est défini par deux vecteurs partiels, un premier vecteur partiel (Vk31) étant défini par un mouvement de retrait relatif s'étendant obliquement de l'outil (40) dans l'entredent (31), et un deuxième vecteur partiel (Vk32) étant défini par un vecteur s'étendant de façon linéaire en direction du pied de dent (32) de l'entredent (31) à réaliser.

7. Procédé selon l'une des revendications précédentes, **caractérisé en ce que** l'outil (40) comprend des premières lames principales (42) pour usiner des flancs de dent concaves, des deuxièmes lames principales (43) pour usiner des flancs de dent convexes et des lames de tête (45), dans lequel lorsque l'on effectue le premier mouvement d'immersion, les premières lames principales (42), les deuxièmes lames principales (43) et les lames de tête (45) enlèvent des copeaux.

8. Procédé selon la revendication 7, **caractérisé en ce que**, lorsque l'on effectue le mouvement transversal relatif, seules les deuxièmes lames principales (43) et éventuellement les lames de tête (45) enlèvent des copeaux.

9. Procédé selon la revendication 7, **caractérisé en ce que**, lorsque l'on effectue le premier mouvement d'immersion linéaire relatif avec la première lame principale (42) dans la zone proche de la tête de dent du premier flanc de dent (24) le long d'une première ligne, il est produit le profil de flanc définitif, et **en ce que** lorsqu'on effectue le mouvement transversal relatif avec la deuxième lame principale (43) dans la zone proche de la tête de dent du deuxième flanc de dent (23) le long d'une deuxième ligne, il est produit le profil de dent définitif, la première ligne et la deuxième ligne étant situées sur une surface de l'enveloppe de cône (KB) de la pièce à usiner (30).

10. Procédé selon l'une des revendications précédentes, **caractérisé en ce que**, au cours d'une étape en aval, la pièce à usiner (30) est tournée légèrement pour effectuer une retouche, dans un sens de rotation positif et négatif autour de l'axe de rotation de la pièce à usiner (RA), pendant que l'outil (40) continue d'être entraîné en rotation autour de l'axe de rotation de l'outil (WR).

11. Procédé selon l'une des revendications précédentes, **caractérisé en ce que** ceci est réalisé soit en tant que procédé partiel avec des rotations de pas intermittentes, soit en tant que procédé continu.
